(19) Europäisches Patentamt
European Patent Office
Office européen des brevets

(11) Veröffentlichungsnummer: **0 292 672**
**A2**

(12) # EUROPÄISCHE PATENTANMELDUNG

(21) Anmeldenummer: 88105162.7

(51) Int. Cl.4: C08K 5/37 , C08L 27/06

(22) Anmeldetag: 30.03.88

(30) Priorität: 23.05.87 DE 3717448

(43) Veröffentlichungstag der Anmeldung: 30.11.88 Patentblatt 88/48

(84) Benannte Vertragsstaaten: BE DE FR GB IT NL SE

(71) Anmelder: **HÜLS AKTIENGESELLSCHAFT**
**Patentabteilung / PB 15 - Postfach 13 20**
**D-4370 Marl 1(DE)**

(72) Erfinder: **Kemper, Bruno, Dr.**
**Haardweg 4**
**D-4358 Haltern(DE)**
Erfinder: **Schoenkaes, Udo, Dr.**
**Im Wienäckern 34**
**D-4358 Haltern(DE)**

(54) **Stabilisatormischungen und damit stabilisierte Formmassen auf der Basis von Polymerisaten des Vinylchlorids.**

(57) Die bislang bekannten physiologisch einwandfreien Stabilisatorkombinationen aus z. B. Zink- und Calciumcarbonaten als Primärstabilisatoren und z. B. Estern der Thioglykolsäure als Costabilisatoren sind sowohl bezüglich der Anfangsfarbe als auch der Langzeitstabilität noch ungenügend.

Es werden Stabilisatorkombinationen vorgeschlagen, die neben den bekannten Primärstabilisatoren als Costabilisatoren Ester aus bestimmten Mercaptocarbonsäuren und phenolsubstituierten aliphatischen Alkoholen enthalten.

Anwendung für physiologisch einwandfreie Formmassen auf Basis Polyvinylchlorid oder Vinylchlorid-Mischpolymerisaten, vor allem auch für den Lebensmittelsektor.

EP 0 292 672 A2

# Stabilisatormischungen und damit stabilisierte Formmassen auf der Basis von Polymerisaten des Vinylchlorids

Die vorliegende Erfindung betrifft die Wärmestabilisierung von Polymerisaten auf Basis von Vinylchlorid bzw. im wesentlichen Vinylchlorid enthaltenden Mischpolymerisaten.

Chlorhaltige Thermoplaste erleiden bekanntlich bei den zu ihrer Verarbeitung erforderlichen hohen Temperaturen einen Abbau. Dieser Abbau führt zu unerwünschten Verfärbungen sowie einer Beeinträchtigung der mechanischen Eigenschaften. Zur Vermeidung dieses Abbaus werden daher den Polymerisaten vor der Warmverformung Verarbeitungsstabilisatoren zugesetzt. Für Polyvinylchlorid und im wesentlichen Vinylchlorid enthaltende Mischpolymerisate verwendet man hierfür besonders Organozinnverbindungen oder organische bzw. anorganische Bleisalze oder organische Antimonverbindungen. Auch Kombinationen von Carboxylaten oder Phenolaten der Metalle Barium, Cadmium, Calcium und Zink werden zu diesem Zweck eingesetzt. Die Wirkungsweise dieser Stabilisatoren bzw. ihr Zusammenwirken (Synergismus) ist in der einschlägigen Literatur beschrieben, z. B. in L. I. Nass, "Actions and Characteristics of Stabilizers" in Encyclopedia of PVC, Seite 295, Dekker, New York 1976.

Mit den beschriebenen Stabilisatoren ist in der Praxis zwar eine ausreichende Thermostabilität erreichbar, jedoch sind Blei-, Antimon- und Cadmiumverbindungen aufgrund ihrer Toxizität bedenklich und deshalb in vielen Bereichen nicht einsetzbar. Besonders in Verpackungsmaterialien für Lebensmittel und im medizinischen Sektor können diese Stabilisatoren nicht verwendet werden. Organozinnverbindungen, von denen viele toxikologisch unbedenklich sind, eignen sich nicht für eine breite Anwendung, da sie zu teuer, d. h. schwer zugänglich bzw. nur in aufwendiger Weise herstellbar sind. Außerdem sind schwefelhaltige Zinnstabilisatoren in der Beständigkeit gegen UV-Licht den anderen Metallverbindungen unterlegen und verursachen organoleptische Probleme.

Die physiologisch einwandfreien Stabilisatoren auf der Basis von Kombinationen aus Calcium- und Zinkcarboxylaten sind in den meisten An wendungsbereichen in ihrer Wirksamkeit unzureichend. Ihre Nachteile äußern sich in einer nicht ausreichenden Langzeitstabilität und/oder einer unbefriedigenden Anfangsfarbe. Die Kombination dieser Metallseifen mit wirksamen Costabilisatoren, welche die Anfangsfarbe und die Langzeitstabilität verbessern, ist daher unerläßlich. Als Costabilisatoren verwendet man beispielsweise Epoxyverbindungen, organische Phosphite, mehrwertige Alkohole oder 1,3-Diketone. Auch die üblichen Antioxidationsmittel sind in gewissem Umfang zur Verbesserung der Langzeitstabilität einsetzbar. Trotzdem kann auch mit Kombinationen dieser bislang bekannten Costabilisatoren noch nicht das gewünschte Stabilitätsniveau erreicht werden.

Eine bessere Wirksamkeit als die genannten Costabilisatoren zeigen Ester der Thioglykolsäure (EP-B-0 022 047). Hier kommen allerdings aus Gründen des Geruchsbildes nur Ester langkettiger oder mehrfachfunktioneller Alkohole in Betracht, deren Wirksamkeit im Hinblick auf die Langzeitstabilität wiederum nicht ausreichend ist.

Auch durch gleichzeitige Verwendung von Thioglykolsäureestern und phenolischen Atioxidantien (GB-PS 1 001 344) kann keine befriedigende Stabilität erreicht werden.

Aufgabe der vorliegenden Erfindung ist folglich eine deutliche Verlängerung der Primärstabilisatorwirkung bei gleichzeitiger Verbesserung der Anfangsfarbe.

Die Aufgabe wurde überraschenderweise gelöst durch die Bereitstellung von Stabilisatormischungen, enthaltend wenigstens einen Primärstabilisator und als Costabilisator eine oder mehrere Verbindungen der Formel I

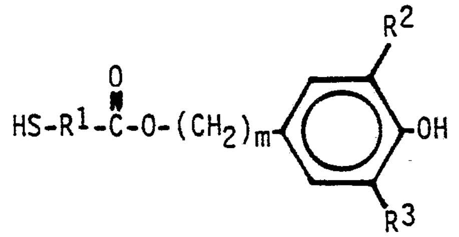 ,

in der
$R^1$ eine geradkettige oder verzweigte Alkylen- oder Alkylidengruppe mit 1 bis 20 Kohlenstoffatomen oder eine, gegebenenfalls substituierte, Phenylengruppe bedeutet, $R^2$ und $R^3$ gleich oder verschieden sind und

für Wasserstoff oder geradkettige oder verzweigte Alkylgruppen mit 1 bis 4 Kohlenstoffatomen stehen und m ganze Zahlen von 2 bis 6 bedeuten kann, während $R^1$ auch für eine Gruppe der Formel II

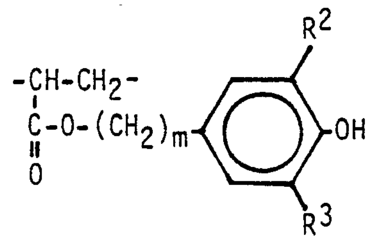

stehen kann, in der $R^2$, $R^3$ und m die oben angegebenen Bedeutungen haben.

Bevorzugt sind Stabilisatormischungen mit solchen Verbindungen der Formel I, in denen $R^1$ eine Methylengruppe, Ethylidengruppe oder o-Phenylengruppe ist und $R^2$ und $R^3$ für Wasserstoff, Methyl- oder t-Butylgruppen stehen.

Diese Stabilisatormischungen können zweckmäßigerweise zur Stabilisierung von Formmassen auf der Basis von Polymerisaten des Vinylchlorids verwendet werden.

Die beschriebene Aufgabenstellung wird somit auch gelöst durch die Bereitstellung stabilisierter Formmassen auf der Basis von Polymerisaten des Vinylchlorids, die wenigstens einen Primärstabilisator und als Costabilisator eine oder mehrere Verbindungen der Formel I

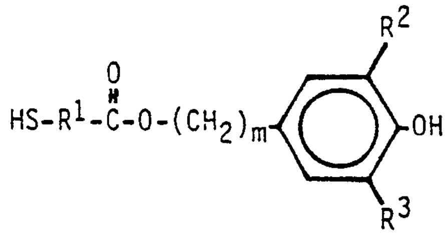

enthalten, in der $R^1$ eine geradkettige oder verzweigte Alkylen- oder Alkylidengruppe mit 1 bis 20 Kohlenstoffatomen oder eine, gegebenenfalls substituierte, Phenylengruppe bedeutet, $R^2$ und $R^3$ gleich oder verschieden sind und für Wasserstoff oder geradkettige oder verzweigte Alkylgruppen mit 1 bis 4 Kohlenstoffatomen stehen und m ganze Zahlen von 2 bis 6 bedeuten kann, während $R^1$ auch für eine Gruppe der Formel II

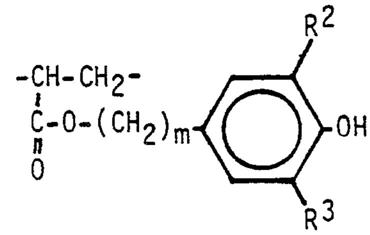

stehen kann, in der $R^2$, $R^3$ und m die oben angegebenen Bedeutungen haben.

Bevorzugt sind Formmassen mit solchen Verbindungen der Formel I, in denen $R^1$ eine Methylengruppe, Ethylidengruppe oder o-Phenylengruppe ist und $R^2$ und $R^3$ für Wasserstoff, Methyl- oder t-Butylgruppen stehen.

Bei den Polymerisaten des Vinylchlorids, welche die Basis der erfindungsgemäßen stabilisierten Formmassen bilden, handelt es sich um Polyvinylchlorid oder Mischpolymerisate des Vinylchlorids, welche durch die bekannten Methoden hergestellt werden können, wie sie beispielsweise bei Kainer, "Polyvinylchlorid und Vinylchlorid-Mischpolymerisate", Springer-Verlag (1965), Seiten 7 bis 59, beschrieben werden (Masse-, Suspensions- und Emulsionspolymerisation). Die Mischpolymere können bis zu 30 Gewichtsprozent an Comonomeren, wie z. B. Vinylacetat, Vinylidenchlorid, Vinylether, Acrylnitril, Acrylsäureester, Maleinsäuremono- oder -diester oder Olefine enthalten. Es lassen sich auch Pfropfpolymerisate

einsetzen, deren Herstellung z. B. in der o. a. Monographie von Kainer auf den Seiten 111 bis 114 beschrieben wird.

Die Verbindungen der Formel I können nach den gängigen Methoden der organischen Synthese durch Veresterung von Mercaptocarbonsäuren mit phenolgruppenhaltigen Alkoholen hergestellt werden. Vorzugsweise werden die Verbindungen durch sauer katalysierte Veresterung unter azeotroper Entfernung des Reaktionswassers hergestellt.

Geeignete Mercaptocarbonsäuren für die Herstellung von Verbindungen der Formel I sind z. B. Mercaptovaleriansäuren, Mercaptocapronsäuren, Merçaptocaprylsäuren, Mercaptocaprinsäuren, Mercaptolaurinsäuren, Mercaptomyristinsäuren, Mercaptopalmitinsäuren, Mercaptostearinsäuren, Mercaptoarachinsäuren, vorzugsweise Thioglykolsäure, 2-Mercaptopropionsäure, 3-Mercaptopropionsäure, 2-Mercaptobuttersäure, 3-Mercaptobuttersäure, 2-Mercaptobernsteinsäure, 2-Mercaptobenzoesäure, 3-Mercaptobenzoesäure oder 4-Mercaptobenzoesäure.

Als Alkoholkomponente können z. B. eingesetzt werden 3-(3,5-Di-t-budroxyphenyl)-propanol-1, 4-(3,5-Di-t-butyl-4-hydroxyphenyl)-butanol-1, 6-(3,5-Di-t-butyl-4-hydroxyphenyl)-hexanol-1, 3-(3,5-Dimethyl-4-hydroxyphenyl)-propanol-1, 4-(3,5-Dimethyl-4-hydroxyphenyl)-butanol-1, 6-(3,5-Dimethyl-4-hydroxyphenyl)-hexanol-1, 3-(3-t-Butyl-4-hydroxyphenyl)-propanol-1, 4-(3-t-Butyl-4-hydroxyphenyl)-butanol-1, 6-(3-t-Butyl-4-hydroxyphenyl)-hexanol-1, 3-(3-t-Butyl-5-methyl-4-hydroxyphenyl)-propanol-1, 4-(3-t-Butyl-5-methyl-4-hydroxyphenyl)-butanol-1, 6-(3-t-Butyl-5-methyl-4-hydroxyphenyl)-hexanol-1, 2-(3,5-Di-t-butyl-4-hydroxyphenyl)-ethanol-1, 2-(3,5-Dimethyl-4-hydroxyphenyl)-ethanol-1.

Erfindungsgemäß werden diese Costabilisatoren der Formel I mit Primärstabilisatoren, wie z. B. Wärmestabilisatoren aus der Gruppe der Metallseifen, Salze aromatischer Carbonsäuren, Metallphenolate und/oder zinnorganische Verbindungen sowie mit weiteren üblichen Verarbeitungshilfsmitteln (Gleitmittel etc.) kombiniert. Bevorzugt werden die Verbindungen der Formel I mit Seifen, aromatischen Carboxylaten oder Phenolaten der Metalle Calcium, Barium und Zink kombiniert.

Als Metallseifen zu nennen sind vorzugsweise fettsaure Salze des Calciums, Bariums oder Zinks, die sich von Fettsäuren mit 8 bis 36, vorzugsweise 8 bis 22 Kohlenstoffatomen ableiten. Insbesondere kommen hier Caprylate, Caprinate, Laurate, Myristate, Palmitate, Stearate und Behenate infrage. Ebenfalls sind verwendbar die Salze von verzweigten Fettsäuren, wie 2-Ethylhexansäure, 2-Octyldecansäure oder Tetradecyloctadecansäure, oder auch Hydroxyfettsäuren, wie 9(10)-Hydroxystearinsäure oder 9,10-Dihydroxystearinsäure. Die Metallseifen können aus den Salzen einzelner Fettsäuren oder auch von Fettsäuregemischen, wie sie aus natürlichen Fetten gewonnen werden, bestehen. Als Salze aromatischer Carbonsäuren kommen besonders die Calcium-, Barium- und Zinksalze der Benzoesäure und der substituierten Benzoesäuren, insbesondere der alkylsubstituierten Benzoesäuren, in Betracht. Als Phenolate lassen sich einsetzen: Methylphenolate, t-Butylphenolate, Nonylphenolate, Dodecylphenolate oder auch Naphthenate des Calciums, Bariums oder Zinks.

Es hat sich als vorteilhaft erwiesen, die erfindungsgemäßen Stabilisatormischungen in der Weise zusammenzusetzen, daß 100 Gewichtsteile der Mischung in der Regel 2 bis 50 Gewichtsteile, vorzugsweise 10 bis 30 Gewichtsteile, einer oder mehrerer der o. g. Zinksalze, 5 bis 95 Gewichtsteile, vorzugsweise 10 bis 70 Gewichtsteile, eines oder mehrerer der o. g. Calciumsalze und/oder 5 bis 95 Gewichtsteile, vorzugsweise 10 bis 70 Gewichtsteile, eines oder mehrerer der o. g. Bariumsalze sowie 1 bis 20 Gewichtsteile, vorzugsweise 3 bis 10 Gewichtsteile, einer oder mehrerer Verbindungen der Formel I enthalten. Darüber hinaus kann es zweckmäßig sein, diesen Stabilisatormischungen weitere Costabilisatoren zuzumischen.

So kann es beispielsweise vorteilhaft sein, den Stabilisatormischungen, bezogen auf ein Gewichtsteil der Verbindungen der Formel I, noch zusätzlich 0,05 bis 5 Gewichtsteile einer 1,3-Dicarbonylverbindung zuzusetzen. Diese Verbindungen und ihre Verwendung als Costabilisatoren für PVC sind bekannt (vgl. FR-PS 22 97 227 und FR-PS 23 24 681). Im allgemeinen kommen solche 1,3-Dicarbonylverbindungen infrage, die wenigstens zwei Alkyl-, Aryl- oder Aralkylgruppen im Molekül enthalten. Solche Vertreter dieser Verbindungsklasse sind beispielsweise Stearoyl-benzoyl-methan oder Palmitoyl-stearoyl-methan.

Eine günstige stabilisierende Wirkung kann auch durch den Zusatz eines oder mehrerer organischer Phosphite zu den Stabilisatormischungen erreicht werden. Vorzugsweise kommen hier Phosphorigsäureester infrage, die wenigstens einen aromatischen Rest enthalten. Vertreter dieser Verbindungsklasse sind beispielsweise Triphenylphosphit, Trisnonylphenylphosphit, Diphenyl-isodecyl-phosphit, Phenyl-diisodecylphosphit oder Diphenyl-pentaerythrityl-diphosphit. Bezogen auf 1 Teil Verbindungen der Formel I können gegebenenfalls 1 bis 10 Teile eines oder mehrerer organischer Phosphite zugesetzt werden.

Gegebenenfalls kann auch eine günstige Wirkung erzielt werden, wenn man den Stabilisatormischungen, bezogen auf ein Teil der Verbindungen der Formel I, zusätzlich 1 bis 10 Teile eines aliphatischen, mehrwertigen Alkohols zusetzt. Die Verwendung dieser Verbindungen als Costabilisatoren für PVC

ist ebenfalls bekannt. Es kommen hier in erster Linie Verbindungen infrage wie Pentaerythrit, Dipentaerythrit, Trimethylolpropan, Di-trimethylolpropan oder Sorbit. Auch polymere Verbindungen, wie Polyvinylalkohol oder teilverseiftes Polyvinylacetat, können verwendet werden.

Schließlich kann es gegebenenfalls vorteilhaft sein, den Stabilisatormischungen ein Antioxidationsmittel zuzusetzen. Infrage kommen hier beispielsweise 2,2-Diphenylolpropan, 2,6-Di-t-Butyl-4-methyl-phenol, Octadecyl-(3,5-di-t-butyl-4-hydroxyphenyl)-propionat, 1,1,3-Tris-(5-t-butyl-4-hydroxy-2-methylphenyl)-butan oder Pentaerythrityl-tetrakis-[3(3,5-di-t-butyl-4-hydroxyphenyl)]-propionat .

Es ist im allgemeinen ausreichend, zur Erzielung einer guten Wirksamkeit 100 Gewichtsteilen Polyvinylchlorid bzw. im wesentlichen Vinylchlorid enthaltendem Mischpolymerisat 0,2 bis 5 Gewichtsteile, vorzugsweise 0,5 bis 3 Gewichtsteile, der erfindungsgemäßen Stabilisatormischung aus Primär- und Costabilisator zuzusetzen.

Zweckmäßigerweise ist die Dosierung so zu wählen, daß 100 Gewichtsteile der stabilisierten Formmassen 0,02 bis 1,0, vorzugsweise 0,05 bis 0,5 Gewichtsteile der Verbindungen der Formel I enthalten.

Die Einarbeitung der erfindungsgemäßen Stabilisatormischungen in die zu stabilisierenden Polymeren kann durch übliche Methoden, z. B. durch einfaches mechanisches Vermischen der Komponenten in konventionellen Mischern erfolgen. Bei diesem Mischvorgang können weitere übliche Zusatzstoffe eingearbeitet werden, wie z. B. Gleitmittel (Montanwachse oder Polyolpartialester), Weichmacher, Füllstoffe, Lichtstabilisatoren oder auch epoxidierte Fettsäureester. Die homogene Verteilung der Stabilisatoren kann z. B. mit Hilfe eines Zweiwalzenmischers bei 150 bis 200 °C erfolgen.

Zur weiteren Erläuterung der Erfindung und zum Nachweis des überraschenden technischen Fortschritts dienen die im folgenden beschriebenen Beispiele.

Herstellung der Verbindungen der Formel I

19,5 g (0,17 Mol) Thioglykolsäure (80%ige wäßrige Lösung), 45,0 g (0,17 Mol) 3-(3,5-Di-t-butyl-4-hydroxyphenyl)-propanol-1 und 0,3 g p-Toluolsulfonsäure wurden in 70 ml Hexan am Wasserabscheider zum Sieden erhitzt. Nach drei Stunden war die berechnete Menge Wasser vollständig abgetrennt. Nach Abkühlen der Reaktionslösung wurde mit 20 ml gesättigter Natriumhydrogencarbonatlösung gewaschen, die Lösung über Natriumsulfat getrocknet und im Vakuum eingeengt. Es wurden 56,9 g (99 %) Thioglykolsäure-3-(3,5-di-t-butyl-4-hydroxyphenyl)-propylester als farbloses Öl erhalten.

Das gleiche Verfahren läßt sich unter identischen Bedingungen für die Veresterung der anderen genannten Mercaptocarbonsäuren mit den anderen genannten phenolgruppenhaltigen Alkoholen anwenden.

Zusammensetzung der Stabilisatormischungen

Mischung 1 enthält 5,0 Gewichtsteile Zinkstearat und 10,0 Gewichtsteile Calciumstearat. Mischung 2 enthält neben 15,0 Gewichtsteilen der Mischung 1 1,0 Gewichtsteile Thioglykolsäure-2-ethylhexylester und 1,0 Gewichtsteile 3-(3,5-Di-t-butyl-4-hydroxyphenyl)-propionsäuremethylester.

Durch Zusatz von je 2,0 Gewichtsteilen der Costabilisatoren a) bis h) zu 15,0 Gewichtsteilen der Mischung 1 wurden die erfindungsgemäßen Stabilisatormischungen 3 bis 10 erhalten.

3 a) Thioglykolsäure-3-(3,5-di-t-butyl-4-hydroxyphenyl)-propylester
4 b) 2-Mercaptopropionsäure-3-(3,5-di-t-butyl-4-hydroxyphenyl)-propylester
5 c) 3-Mercaptopropionsäure-3-(3,5-di-t-butyl-4-hydroxyphenyl)-propylester
6 d) Mercaptobernsteinsäure-bis-3-(3,5-di-t-butyl-4-hydroxyphenyl)-propylester
7 e) Thioglykolsäure-3-(3-t-butyl-4-hydroxyphenyl)-propylester
8 f) Thioglykolsäure-6-(3-t-butyl-4-hydroxyphenyl)-hexylester
9 g) Thioglykolsäure-6-(3,5-dimethyl-4-hydroxyphenyl)-hexylester
10 g) Thiosalicylsäure-3-(3-t-butyl-4-hydroxyphenyl)-propylester

Mischung 11 enthält 3,0 Gewichtsteile Zinkstearat und 6,0 Gewichtsteile Bariumstearat. Mischung 12 enthält neben 9,0 Gewichtsteilen der Mischung 11 1,0 Gewichtsteile Thioglykolsäure- 2-ethylhexylester und 1,0 Gewichtsteile 3-(3,5-Di-t-butyl-4-hydroxyphenyl)-propionsäuremethylester.

Durch Zusatz von je 2,0 Gewichtsteilen der Costabilisatoren a) bis h) zu 9,0 Gewichtsteilen der Mischung 11 wurden die erfindungsgemäßen Stabilisatormischungen 13 bis 20 erhalten.

13 a) Thioglykolsäure-3-(3,5-di-t-butyl-4-hydroxyphenyl)-propylester
14 b) 2-Mercaptopropionsäure-3-(3,5-di-t-butyl-4-hydroxyphenyl)-propylester
15 c) 3-Mercaptopropionsäure-3-(3,5-di-t-butyl-4-hydroxyphenyl)-propylester

16 d) Mercaptobernsteinsäure-bis-3-(3,5-di-t-butyl-4-hydroxyphenyl)-propylester
17 e) Thioglykolsäure-3-(3-t-butyl-4-hydroxyphenyl)-propylester
18 f) Thioglykolsäure-6-(3-t-butyl-4-hydroxyphenyl)-hexylester
19 g) Thioglykolsäure-6-(3,5-dimethyl-4-hydroxyphenyl)-hexylester
20 h) Thiosalicylsäure-3-(3-t-butyl-4-hydroxyphenyl)-propylester

Herstellung und Prüfung der Walzfelle

Die Wirksamkeit der Stabilisatorkombinationen wurde durch Bestimmung der statischen Thermostabilität von Walzfellen geprüft. Hierzu wurden die Stabilisatorkombinationen und gegebenenfalls Weichmacher und Verarbeitungshilfsmittel mit Polyvinylchlorid 1 Minute lang in einer Labormühle gemischt und anschließend auf einem Doppelwalzwerk bei einer Walzentemperatur von 170 °C im Gleichlauf im Verlauf von 5 Minuten zu 1 mm starken Walzfellen verarbeitet. Aus den Walzfellen wurden Strei fen der Dimension 10 x 250 mm geschnitten, die anschließend in einem Thermotestofen (Metrastat Typ Sigma) bei 180 °C thermisch belastet wurden. Die Probestreifen wurden dabei kontinuierlich aus der Heizzone ausgefahren und zeigten durch die Farbveränderung die Wirkung der Stabilisatoren.

Zur Herstellung der Polyvinylchlorid-Formmassen 1 bis 10 wurden je 100 Gewichtsteile Suspensions-Polyvinylchlorid (K-Wert 70; VESTOLIT S 7054, Hüls AG, Marl) mit 30 Gewichtsteilen Dioctylphthalat (VESTINOL AH, Hüls AG, Marl) und den Stabilisatormischungen 1 bis 10 vermischt, in der angegebenen Weise zu Probestreifen verarbeitet und im Thermotest geprüft. Der jeweils entsprechende Verlauf der Verfärbung der Probestreifen während der thermischen Belastung ist abgeschätzt entsprechend der folgenden Skala:

0 1 2 3 4 5 6 7 8. 9 10

farblos -----→ gelb -----→ orange ----→ schwarz

Tabelle A

| Bsp. Nr. | Stabilisatormischung | Gewichtsteile | Belastung bei 180 °C in Minuten | | | | | | | | |
|---|---|---|---|---|---|---|---|---|---|---|---|
| | | | 0 | 10 | 20 | 30 | 40 | 50 | 60 | 70 | 80 |
| | | | Farbe | | | | | | | | |
| zum Vergleich | | | | | | | | | | | |
| 1 | 1 | 1,5 | 2 | 3 | 3 | 7 | 10 | 10 | 10 | 10 | 10 |
| 2 | 2 | 1,7 | 0 | 0 | 0 | 0 | 1 | 1 | 2 | 7 | 10 |
| erfindungsgemäß | | | | | | | | | | | |
| 3 | 3 | 1,7 | 0 | 0 | 0 | 0 | 0 | 0 | 1 | 3 | 7 |
| 4 | 4 | 1,7 | 0 | 0 | 0 | 0 | 0 | 0 | 1 | 4 | 8 |
| 5 | 5 | 1,7 | 0 | 0 | 0 | 0 | 0 | 1 | 2 | 4 | 6 |
| 6 | 6 | 1,7 | 0 | 0 | 0 | 0 | 0 | 0 | 1 | 2 | 5 |
| 7 | 7 | 1,7 | 0 | 0 | 0 | 0 | 0 | 0 | 1 | 4 | 8 |
| 8 | 8 | 1,7 | 0 | 0 | 0 | 0 | 0 | 1 | 2 | 5 | 10 |
| 9 | 9 | 1,7 | 0 | 0 | 0 | 0 | 0 | 2 | 4 | 7 | 10 |
| 10 | 10 | 1,7 | 0 | 0 | 0 | 0 | 0 | 0 | 1 | 3 | 5 |

Zur Herstellung der Polyvinylchlorid-Formmassen 11 bis 20 wurden je 100 Gewichtsteile Suspensions-Polyvinylchlorid (K-Wert 70; VESTOLIT S 7054, Hüls AG, Marl) mit 30 Gewichtsteilen Dioctylphthalat (VESTINOL AH, Hüls AG, Marl) und den Stabilisatormischungen 11 bis 20 vermischt, in der angegebenen Weise zu Probestreifen verarbeitet und im Thermotest geprüft.

Tabelle B

| Bsp. Nr. | Stabilisatormischung | Gewichtsteile | Belastung bei 180 °C in Minuten | | | | | | | | |
|---|---|---|---|---|---|---|---|---|---|---|---|
| | | | 0 | 10 | 20 | 30 | 40 | 50 | 60 | 70 | 80 |
| | | | Farbe | | | | | | | | |
| zum Vergleich | | | | | | | | | | | |
| 11 | 11 | 0,9 | 3 | 3 | 3 | 3 | 2 | 10 | 10 | 10 | 10 |
| 12 | 12 | 1,1 | 0 | 0 | 0 | 1 | 2 | 3 | 3 | 10 | 10 |
| erfindungsgemäß | | | | | | | | | | | |
| 13 | 13 | 1,1 | 0 | 0 | 0 | 0 | 0 | 0 | 0 | 1 | 1 |
| 14 | 14 | 1,1 | 0 | 0 | 0 | 0 | 0 | 0 | 1 | 2 | 4 |
| 15 | 15 | 1,1 | 0 | 0 | 0 | 0 | 1 | 1 | 2 | 2 | 2 |
| 16 | 16 | 1,1 | 0 | 0 | 0 | 0 | 0 | 0 | 0 | 1 | 4 |
| 17 | 17 | 1,1 | 0 | 0 | 0 | 0 | 0 | 0 | 0 | 1 | 1 |
| 18 | 18 | 1,1 | 0 | 0 | 0 | 0 | 0 | 0 | 1 | 3 | 5 |
| 19 | 19 | 1,1 | 0 | 0 | 0 | 0 | 0 | 0 | 1 | 10 | 10 |
| 20 | 20 | 1,1 | 0 | 0 | 0 | 0 | 0 | 0 | 2 | 2 | 2 |

Die überlegene Wirksamkeit der erfindungsgemäßen Stabilisatorkombinationen, vor allem in der Anfangsfarbe und in der Langzeitstabilität, gegenüber den Vergleichssubstanzen ist augenfällig.

**Ansprüche**

1. Stabilisatormischungen, enthaltend einen Primärstabilisator und als Costabilisator eine oder mehrere Verbindungen der Formel I

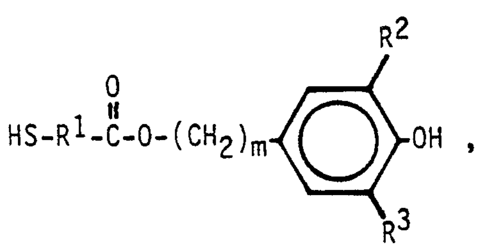

in der
$R^1$ eine geradkettige oder verzweigte Alkylen- oder Alkylidengruppe mit 1 bis 20 Kohlenstoffatomen oder eine, gegebenenfalls substituierte, Phenylengruppe bedeutet, $R^2$ und $R^3$ gleich oder verschieden sind und für Wasserstoff oder geradkettige oder verzweigte Alkylgruppen mit 1 bis 4 Kohlenstoffatomen stehen und m ganze Zahlen von 2 bis 6 bedeutet, während $R^1$ auch eine Gruppe der Formel II

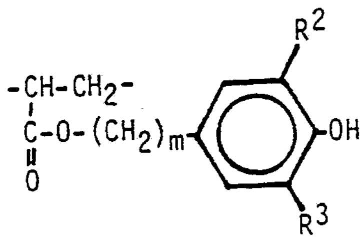

sein kann, in der $R^2$, $R^3$ und m die oben angegebenen Bedeutungen haben.

2. Stabilisatormischungen nach Anspruch 1,
dadurch gekennzeichnet,
daß in der Formel I $R^1$ eine Methylengruppe, Ethylidengruppe oder o-Phenylengruppe ist und $R^2$ und $R^3$ für Wasserstoff, Methyl- oder t-Butylgruppen stehen.

3. Verwendung der Stabilisatormischungen nach den Ansprüchen 1 oder 2 zur Stabilisierung von Formmassen auf der Basis von Polymerisaten des Vinylchlorids.

4. Stabilisierte Formmassen auf der Basis von Polymerisaten des Vinylchlorids, die wenigstens einen Primärstabilisator und als Costabilisator eine oder mehrere Verbindungen der Formel I

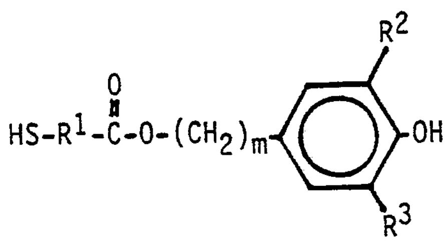

enthalten, in der $R^1$ eine geradkettige oder verzweigte Alkylen-oder Alkylidengruppe mit 1 bis 20 Kohlenstoffatomen oder eine, gegebenenfalls substituierte, Phenylengruppe bedeutet, $R^2$ und $R^3$ gleich oder verschieden sind und für Wasserstoff oder geradkettige oder verzweigte Alkylgruppen mit 1 bis 4 Kohlenstoffatomen stehen und m ganze Zahlen von 2 bis 6 bedeutet, während $R^1$ auch eine Gruppe der Formel II

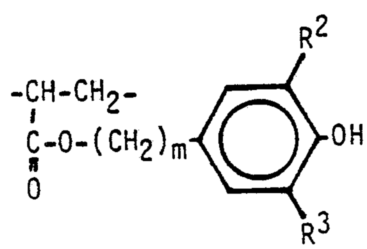

sein kann, in der $R^2$, $R^3$ und m die oben angegebenen Bedeutungen haben.

5. Stabilisierte Formmassen nach Anspruch 4,
dadurch gekennzeichnet,
daß in der Formel I $R^1$ eine Methylengruppe, Ethylidengruppe oder o-Phenylengruppe ist und $R^2$ und $R^3$ für Wasserstoff, Methyl- oder t-Butylgruppen stehen.